# EUROPEAN PATENT SPECIFICATION

(11) **EP 2 014 437 B1**
(45) Date of publication and mention of the grant of the patent: **09.11.2011**
(21) Application number: 07742652.6
(22) Date of filing: 27.04.2007
(51) Int. Cl.: B29C 43/02, B29C 70/06, B29K 105/08, B29C 70/22

(54) **METHOD OF MOLDING COMPOSITE MATERIAL STRUCTURAL MEMBER AND COMPOSITE MATERIAL STRUCTURAL MEMBER**
VERFAHREN ZUM FORMEN EINES VERBUNDSTOFFMATERIAL-STRUKTURELEMENTS UND STRUKTURELEMENT AUS VERBUNDSTOFFMATERIAL
PROCEDE DE MOULAGE D'UN ELEMENT STRUCTUREL EN MATERIAU COMPOSITE ET ELEMENT STRUCTUREL EN MATERIAU COMPOSITE

(30) Priority: 01.05.2006 JP 2006127373
(43) Date of publication of application: 14.01.2009
(73) Proprietor: Mitsubishi Heavy Industries, Ltd., Minato-ku Tokyo 108-8215 (JP)
(72) Inventor: ESAKI, Kouji, Nagasaki-shi, Nagasaki 851-0392 (JP); NONAKA, Yoshinori, Nagasaki-shi, Nagasaki 851-0392 (JP); MIURA, Masami, Nagasaki-shi, Nagasaki 851-0392 (JP); NISHIYAMA, Shigeru, Nagoya-shi, Aichi 455-8515 (JP); ABE, Toshio, Nagoya-shi, Aichi 455-8515 (JP)
(74) Representative: Henkel, Breuer & Partner
(86) International application number: PCT/JP2007/059217
(87) International publication number: WO 2007/129619

(56) References cited:
- EP-A1- 1 535 726
- JP-A- 06 190 847
- JP-A- 10 100 174
- JP-A- 58 201 614
- JP-A- 58 201 614
- JP-A- 2002 240 068
- JP-A- 2004 017 370
- JP-A- 2004 017 370
- JP-A- 2004 017 633
- JP-A- 2004 017 633
- US-A- 5 171 510
- US-A1- 2003 057 582
- CAMPBELL F C ED - CAMPBELL FLAKE C: "Manufacturing processes for advanced composites, Ply Collation: A Major Cost Driver" 1 January 2004 (2004-01-01), MANUFACTURING PROCESSES FOR ADVANCED COMPOSITES, ELSEVIER ADVANCED TECHNOLOGY, OXFORD, GB, PAGE(S) 131 - 173 , XP002535222 ISBN: 9781856174152 * page 141 - page 143 *

## Description

### Technical Field

The present invention relates to a method of molding a composite material structural member used mainly within structural members such as channel materials or angle materials, and also relates to a composite material structural member.

### Background Art

Conventionally, fiber-reinforced resin composite materials of thermosetting resin composite materials and thermoplastic resin composite materials are used as the structural materials within aircraft, automobiles, ships, and trains and the like. Production of these structural members is performed by preparing a prepreg laminate by laminating layers of the fiber-reinforced resin composite material into a flat plate shape, press molding the prepreg laminate by pressing it against a molding die, and then autoclaving (baking) the molded prepreg laminate.
For example, Japanese Unexamined Patent Application, Publication No. 2000-271949 (patent citation 1) discloses a technique in which by applying tension continuously to the fibers within a material throughout the entire continuous molding process, the fibers that function as reinforcing members within the composite material can be aligned linearly, without undergoing repeated wave-like deformations (creases).
Patent Citation 1: Japanese Unexamined Patent Application, Publication No. 2000-271949

### Disclosure of Invention

However, long stringers and the like with H-shaped or T-shaped cross-sections, which are composite material structural members used during the fabrication of lightweight structures for aircraft and the like, are not only very long, but may also include non-developable surfaces. If an attempt is made to prepare a molded item by pressing a flat plate-shaped prepreg laminate against a molding die having this type of non-developable surface, then creasing and cracking may occur, meaning a product of favorable quality cannot be obtained.
In this description, the term "non-developable surface" describes a surface which, even within a curved surface, has a complex curvature that includes a spherical surface and/or a hyperboloidal surface or the like, and in mathematical terms, describes a surface that can be defined by curve analysis, for example, by determining the Gaussian curvature.

The problems described above occur because the fiber used as the reinforcing member within the composite material is a material that exhibits no plastic deformation and has no elasticity. More specifically, when the prepreg laminate is pressed against the molding die, creases occur in those cases where the length of the fiber is longer than the die shape, whereas cracks occur in those cases where the length of the fiber is shorter than the die shape.
On the other hand, the prepreg does exhibit elasticity in directions that do not coincide with the direction of fiber orientation. In a product prepared by superimposing prepregs with these types of properties so that the direction of fiber orientation differs for each layer, it is desirable to retain elasticity within the required direction, while preventing any reduction in the strength of the final product following autoclaving.

In order to address these types of problems, the use of the technique disclosed in the patent citation 1 is one possibility, but in the case of very long molding dies, applying continuous tension to the fibers within the material is all but impossible, meaning the technique cannot be used as an effective way of reducing the occurrence of creasing and cracking.
US 2003/057582 A1 discloses a method of molding a composite material structural member in which a desired shape is molded by pressing a prepreg laminate, prepared by laminating prepregs into a flat plate shape, against a molding die. In the preparation step of preparing the prepreg laminate this method teaches to superpose plural layers of prepreg material with different fiber orientations into the flat plate shape. Each layer is formed by placing triangles and parallelograms cut from a prepreg tape adjacent each other onto a template. Tails extending beyond the template are provided in certain layers so that a top diaphragm of a mold may grip the tails for stretching the prepreg laminate and reducing wrinkles during forming.
EP 1535726 A1 discloses another method of molding a composite material structural member in the form of a three-dimensional molded article like a sphere. In the step of preparing the prepreg laminate this document teaches to form a plurality of notches or cut-outs in each prepreg layer so as to form a set of partially separated flaps and residual portions. These prepregs are then arranged in a three-dimensional shape at predetermined portions of a press die using the partially separated flaps of the prepregs as positioning pieces. The three-dimensional shape as a whole is formed by overlapping edge parts of the residual portions on the partially separated flaps and pressing them. This method accordingly is based on the removal of material sections that would cause wrinkles once layed in the three-dimensional shape.
The present invention has an object of providing a method of molding a composite material structural member that is capable of suppressing the occurrence of fiber creasing even for very long shapes having non-developable surfaces and also providing a composite material structural member.
The present invention provides a method of molding a composite material structural member as defined in claim 1 or in claim 2 and a composite material structure member as defined in claim 3 or in claim 4.
A first aspect of the present invention is a method of molding a composite material structural member in which a desired shape is molded by pressing a prepreg laminate, prepared by laminating prepregs into a flat plate shape, against a molding die, the method comprising a preparation step of preparing a prepreg laminate for molding by laminating a plurality of prepregs with different fiber orientations into a flat plate shape, and a pressure application step of pressing the prepreg laminate for molding prepared in the preparation step against the molding die, and in the preparation step, a specified prepreg having a fiber orientation that coincides with, or is close to, the direction of creasing occurrence is split, either within the region of creasing occurrence or in the vicinity thereof, along a direction that is effective in inhibiting the creasing, and the split prepreg is then used in preparing the prepreg laminate.

By adopting this type of method of molding a composite material structural member, the prepreg in which the fiber orientation coincides with the direction of creasing occurrence, or the prepreg amongst those prepregs used in the prepreg laminate in which the fiber orientation is closest to the direction of creasing occurrence, is split within the region of creasing occurrence or in the vicinity thereof, along a direction that is effective in inhibiting the creasing, and is subsequently laminated with the other prepregs. As a result, for the split prepreg, the degree of freedom of the elasticity of the prepreg within the split region is increased, enabling the occurrence of fiber creasing to be inhibited. Accordingly, a composite material structural member with minimal creasing can be molded.

A second aspect of the present invention is a method of molding a composite material structural member in which a desired shape is molded by pressing a prepreg laminate, prepared by laminating prepregs into a flat plate shape, against a molding die, the method comprising a preparation step of preparing a prepreg laminate for molding by laminating a plurality of prepregs with different fiber orientations into a flat plate shape, and a pressure application step of pressing the prepreg laminate for molding prepared in the preparation step against the molding die, and in the preparation step, partial cuts are inserted within a specified prepreg having a fiber orientation that coincides with, or is close to, the direction of creasing occurrence, the cuts being inserted either within the region of creasing of the specified prepreg or in the vicinity thereof, and being inserted along a direction that is effective in inhibiting the creasing, and following insertion of the cuts, the specified prepreg is used in preparing the prepreg laminate.

By adopting this type of method of molding a composite material structural member, the prepreg in which the fiber orientation coincides with the direction of creasing occurrence, or the prepreg amongst those prepregs used in the prepreg laminate in which the fiber orientation is closest to the direction of creasing occurrence, has partial cuts inserted within the region of creasing occurrence or in the vicinity thereof, along a direction that is effective in inhibiting the creasing. Following insertion of these cuts, the prepreg is laminated with the other prepregs, yielding a prepreg laminate that is ideal for molding. By adopting this approach, the degree of freedom of the elasticity of the prepreg in which the cuts have been inserted is increased within the region of the cuts, enabling the occurrence of fiber creasing to be inhibited. Accordingly, a composite material structural member with minimal creasing can be molded.

In the above method of molding a composite material structural member, a direction that is effective in inhibiting the creasing refers, for example, to a direction substantially orthogonal to the direction of creasing occurrence.

In these types of methods of molding a composite material structural member, because only the prepreg having a fiber orientation that coincides with, or is close to, the direction of creasing occurrence is split or partially cut, the tension or compression within the prepreg in the fiber direction that coincides with, or is close to, the direction of creasing occurrence can be released. As a result, the occurrence of fiber creasing can be efficiently reduced.

A third aspect of the present invention is a composite material structural member molded by pressing a flat plate-shaped prepreg laminate against a molding die, wherein at least one of the prepregs that constitute the prepreg laminate is split within or near a creasing occurrence region in which creasing is expected to occur.

In a composite material structural member having this type of structure, because at least one of the prepregs that constitute the prepreg laminate is split within or near the region of creasing occurrence, the fibers are severed at the split region, meaning the tension or compression within the prepreg in the fiber direction that coincides with, or is close to, the direction of creasing occurrence can be released, which enables the prepreg to stretch and contract freely. As a result, creasing can be prevented, and a high-quality composite material structural member can be provided.

A fourth aspect of the present invention is a composite material structural member molded by pressing a flat plate-shaped prepreg laminate against a molding die, wherein at least one of the prepregs that constitute the prepreg laminate has partial cuts inserted within or near the creasing occurrence region.

In a composite material structural member having this type of structure, because at least one of the prepregs that constitute the prepreg laminate has partial cuts inserted within or near the region of creasing occurrence, the fibers are severed within these cut portions, meaning the tension or compression within the prepreg in the fiber direction that coincides with, or is close to, the direction of creasing occurrence can be released, which enables the prepreg to stretch and contract freely. As a result, creasing can be prevented, and a high-quality composite material structural member can be provided.

A fifth aspect of the present invention is a composite material structural member molded by pressing a flat plate-shaped prepreg laminate against a molding die, wherein at least one of the prepregs that constitute the prepreg laminate is split within or near a creasing occurrence region in which creasing is expected to occur, along a direction that is effective in inhibiting the creasing.

A sixth aspect of the present invention is a composite material structural member molded by pressing a flat plate-shaped prepreg laminate against a molding die, wherein at least one of the prepregs that constitute the prepreg laminate has partial cuts inserted within or near a creasing occurrence region in which creasing is expected to occur, the cuts being inserted along a direction that is effective in inhibiting the creasing.

The present invention enables the occurrence of fiber creasing to be inhibited, and therefore has the effect of being able to provide a high-quality composite material structural member.
Furthermore, as described below, when the effect that splitting or inserting partial cuts within the prepreg has on the strength was ascertained using a strength test, it was confirmed that the reduction in strength was significantly less than that caused by fiber creasing. Accordingly, the present invention also has the effect of suppressing any reductions in the strength of the molded product.

### Brief Description of Drawings

[FIG. 1] A perspective view showing a structural example in which composite material structural members are applied to the construction of a wing box for an aircraft main wing.
[FIG. 2] A cross-sectional view showing the structure of a C-channel as one example of a composite material structural member.
[FIG. 3] A diagram showing a prepreg having a fiber orientation that coincides with, or is close to, the direction of creasing occurrence, wherein the prepreg has been split within the region of creasing occurrence.
[FIG. 4] A flowchart showing the sequence of a method of molding a composite material structural member according to an embodiment of the present invention.
[FIG. 5] A diagram showing a prepreg laminate, comprising a split prepreg, that has been pressed against a C-channel molding die shown in FIG. 2.
[FIG. 6] A graph showing one example of the results of comparing the pre-autoclaving tensile characteristics of prepreg laminates that either include or exclude split fibers.
[FIG. 7] A graph showing one example of the results of comparing the post-autoclaving tensile characteristics of prepreg laminates that either include or exclude split fibers.
[FIG. 8] A diagram showing a prepreg having a fiber orientation that coincides with, or is close to, the direction of creasing occurrence, wherein the prepreg has had cuts inserted within the region of creasing occurrence.
[FIG. 9] A diagram showing an example of the insertion of cuts in a case where the region of creasing occurrence has been specified as being a broad area.

### Explanation of Reference:

1: H-shaped stringer
2: C-channel
3: Web
20: Prepreg laminate

### Best Mode for Carrying Out the Invention

Embodiments of the method of molding a composite material structural member according to the present invention and the resulting composite material structural member are described below based on the drawings.

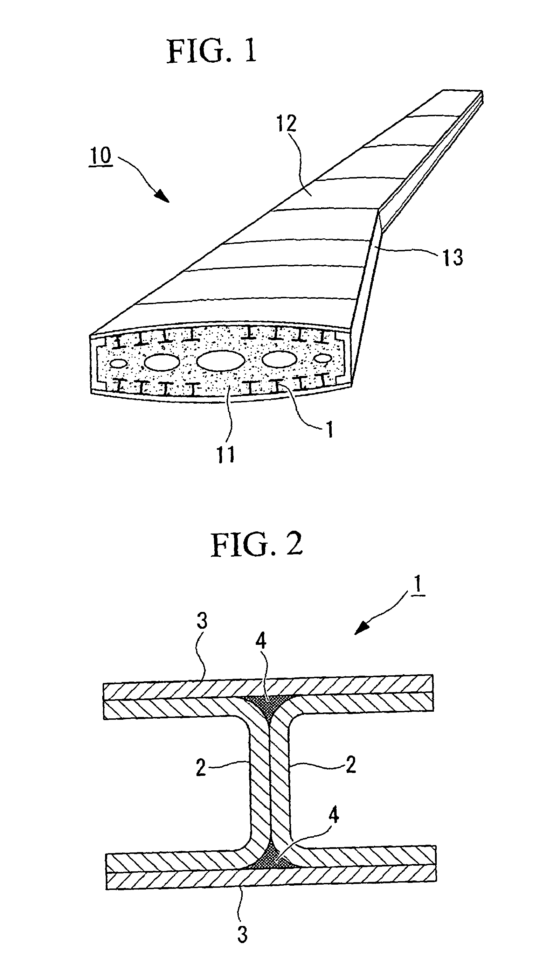

FIG. 1 is a perspective view showing an example of the structure of a wing box that constitutes a portion of an aircraft main wing. This wing box 10 is a hollow structure in which the backbone is formed by combining a plurality of H-shaped stringers 1 and rib materials 11 in a grid pattern, and the exterior of this backbone is then coated with a skin 12 and spars 13.

The H-shaped stringers 1 are composite material structural members with an H-shaped cross-section that extend along the length (the longitudinal direction) of the main wing, and are formed, for example, from a carbon fiber composite material comprising carbon fiber combined with a polymer material such as an epoxy resin. As shown in FIG. 2, each of these H-shaped stringers 1 is composed of six components, namely, two C-channels 2 that are bonded together in a back-to-back arrangement, two plate-shaped flange members 3 that are bonded to the top and bottom surfaces respectively of the bonded C-channels 2, and two fillers 4 that are used to fill the spaces of substantially triangular cross-section formed between the top and bottom surfaces of the back-to-back bonded C-channels 2 and the flange members 3.
Furthermore, in the wing box 10 shown in the drawings, the skin 12 and the spars 13 are formed using a carbon fiber composite material, and the ribs 11 are formed using a titanium alloy or the like, although there are no particular restrictions on these materials.

The C-channels 2 used in constructing the H-stringers 1 are long composite material structural members that are molded with a substantially C-shaped cross-section. A description of an example of the molding of a C-channel 2 is presented below as one example of a method of molding a composite material structural member.

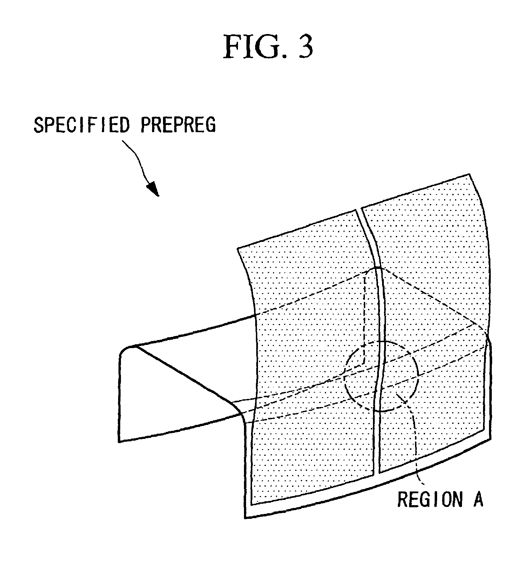

FIG. 3 shows an example of a molding die for the C-channel 2. As shown in FIG. 3, the molding die for the C-channel 2 is a long member having a substantially rectangular cross-section. In the method of molding a composite material structural member according to the present embodiment, a prepreg laminate that has been prepared by laminating prepregs of a carbon fiber composite material into a flat plate shape is pressed against this molding die to form the C-channel 2.

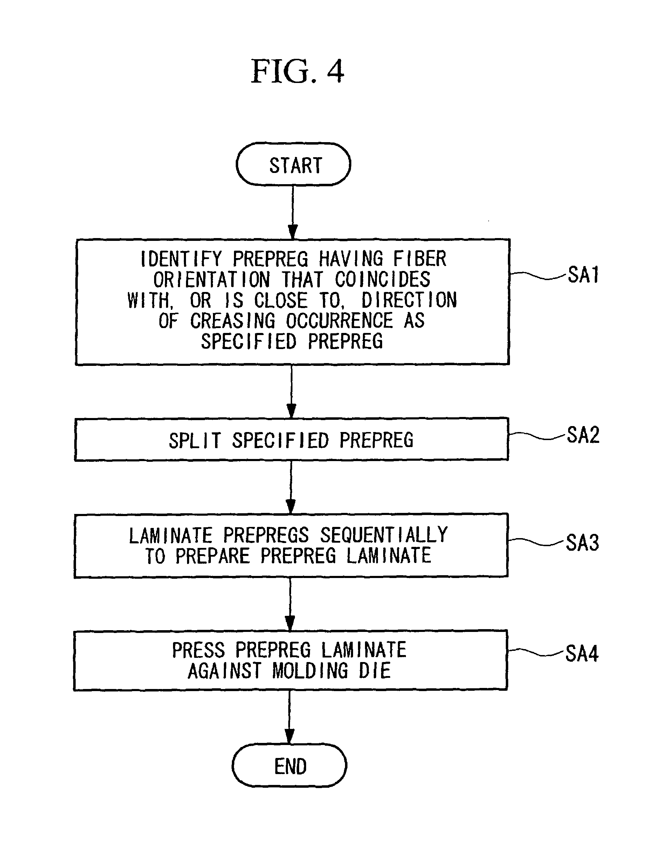

The method of molding a composite material structural member according to this embodiment is described below with reference to FIG. 4.
The C-channel 2 shown in FIG. 3 is a linear channel having a curvature in the circumferential direction, and when a prepreg laminate is pressed against this type of molding die, circumferential creasing can occur, for example within the region A.

Of the prepregs that constitute the prepreg laminate, a specified prepreg in which the fiber orientation coincides with, or is close to, the direction of creasing occurrence within this creasing region is first identified (step SA1 in FIG. 4). The prepreg laminate is prepared, for example, by sequentially laminating prepregs having different fiber orientations. For example, the prepreg laminate may be prepared by sequentially and repeatedly laminating prepregs in which the fiber orientation changes in 45° steps from 0° to 45°, and then to 90° and so on.
When identifying the above specified prepreg, in those cases where a prepreg having a fiber orientation that coincides with the direction of creasing occurrence does not exist, either the prepreg in which the fiber orientation is closest to the direction of creasing occurrence may be identified as the specific prepreg, or all of those prepregs in which the fiber orientation falls within a predetermined range on either side of the direction of creasing occurrence may be identified as specified prepregs.

Subsequently, the specified prepreg is split, either within the region that corresponds with the creasing occurrence or in the vicinity thereof, along a direction that inhibits the creasing (step SA2 in FIG. 4). Here, a direction that inhibits the creasing refers, for example, to a direction substantially orthogonal to the direction of creasing occurrence.
For example, in a case such as that shown in FIG. 3, where the region A has been specified as a region of creasing occurrence, and the circumferential direction has been specified as the creasing direction, the prepreg in which the fiber orientation coincides with, or is closest to, the circumferential direction is split within the region A, and is then laminated with the other prepregs having different fiber orientations (step SA3 in FIG. 4). As a result, those prepregs other than prepreg in which the fiber orientation coincides with, or is close to, the circumferential direction are laminated in the normal manner, without splitting, while the prepreg in which the fiber orientation coincides with, or is closest to, the circumferential direction is split within the region of creasing occurrence prior to lamination.

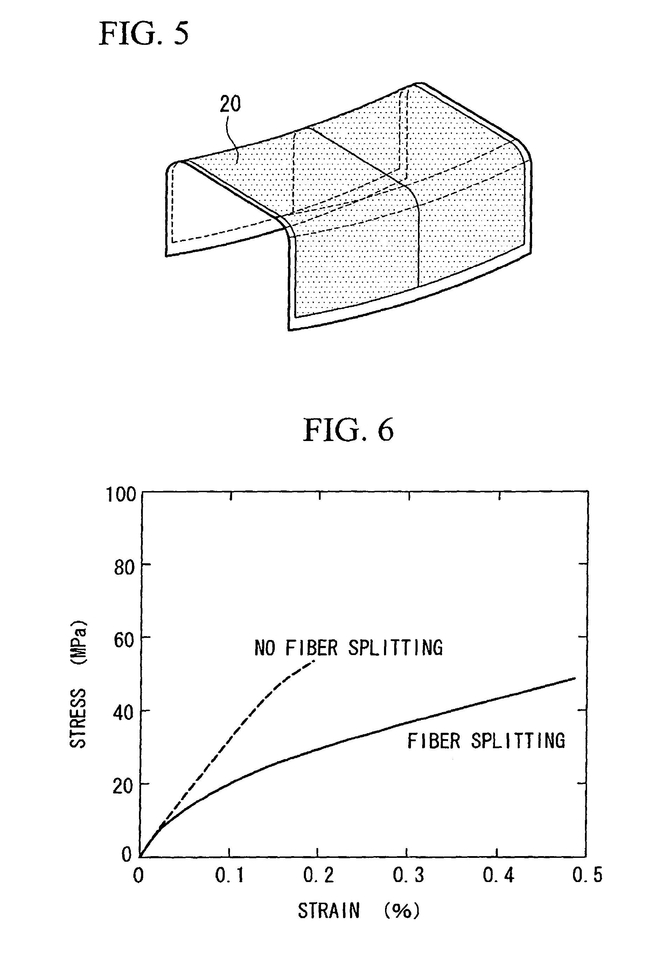

In this manner, once the prepreg laminate has been prepared, by subsequently pressing the prepreg laminate 20 against a molding die (step SA4 in FIG. 4) as shown in FIG. 5, a substantially C-shaped cross-section is formed on the bottom surface and both inner side surfaces of the molding die, thereby completing production of the carbon fiber composite material C-channel 2.

As has been described above, in the method of molding a composite material structural member according to the present embodiment, the prepreg having a fiber orientation that coincides with the direction of creasing occurrence, or the prepreg amongst all the prepregs used in forming the prepreg laminate that has a fiber orientation closest to the direction of creasing occurrence, is split, either within the region of creasing occurrence or in the vicinity thereof, along a direction that is effective in inhibiting the creasing, and is subsequently laminated together with the other prepregs. As a result, the split prepreg is able to stretch and contract freely in the direction of creasing occurrence within the split region, meaning the occurrence of fiber creasing can be inhibited. Accordingly, when the prepreg laminate is molded by being pressed against a molding die, the occurrence of creasing can be suppressed, enabling the production of a composite material structural member with minimal creasing. The molding device such as the molding jig used in the molding process can employ suitable conventional devices.

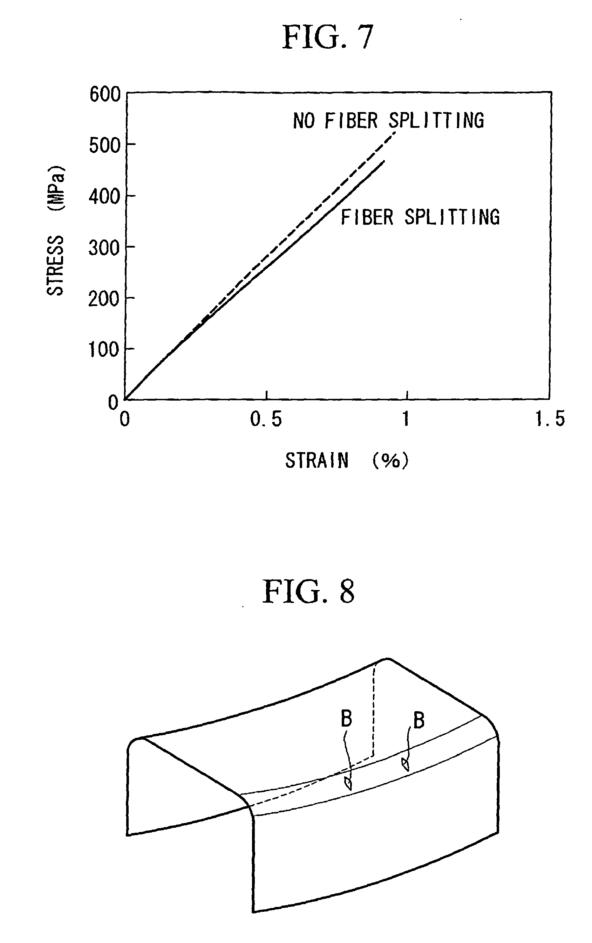

One example of the results of performing a tension test on a pre-autoclaving prepreg laminate in which the fibers oriented in the direction of the applied load have been split is shown in FIG. 6. These results confirm that at the same stress level, a prepreg laminate with split fibers exhibits greater strain than a prepreg laminate in which the fibers are not split. From these types of results it is evident that splitting the fibers enables the suppression of creasing during pressing of the laminate against the molding die.
In a similar manner, one example of the results of performing a tension test on post-autoclaving prepreg laminates is shown in FIG. 7. As is evident from FIG. 6 and FIG. 7, the difference between the prepreg laminates reduces dramatically following autoclaving, meaning splitting of the fibers enables the occurrence of creasing to be suppressed without adversely affecting the quality of the molded product.

In the embodiment described above, the occurrence of creasing was reduced by splitting the prepreg in which the fiber orientation coincides with, or is closest to, the direction of creasing occurrence within the region of creasing occurrence, but as shown in FIG. 8, instead of splitting the prepreg, partial cuts B may be inserted within the region of creasing occurrence, along a direction that inhibits the creasing. Here, a direction that inhibits the creasing refers, for example, to a direction substantially orthogonal to the direction of creasing occurrence.

In this manner, by inserting partial cuts within the region of creasing occurrence of the prepreg having a fiber orientation that coincides with, or is close to, the direction of creasing occurrence, with the cuts inserted along a direction that inhibits the creasing, the compression within the prepreg in the fiber direction that coincides with, or is close to, the direction of creasing occurrence is released, and the degree of freedom of the elasticity of the prepreg is increased, enabling the occurrence of fiber creasing to be reduced. Furthermore, by employing this technique, because only partial cuts are inserted in the prepreg, the process for producing the prepreg laminate is simpler than the case in which the prepreg is split.

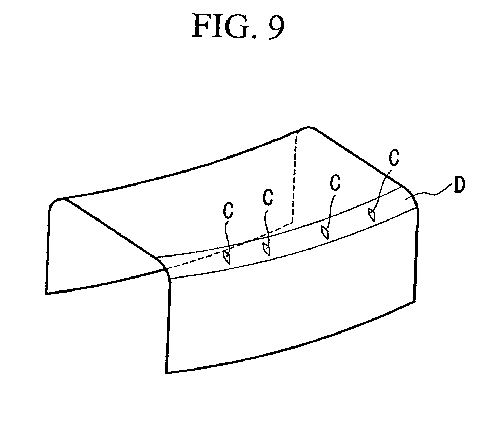

Furthermore, in the embodiment described above, there may be cases where a region identified as a region of creasing occurrence is not localized, but rather extends over a broad area. In these types of cases, multiple splitting may be performed with a predetermined distance between splits, or cuts may be inserted at a plurality of specified locations C, within the region D identified as being a region of creasing occurrence, as shown in FIG. 9. In other words, by providing space for the prepreg to stretch and contract freely within the region of creasing occurrence, the occurrence of creasing can be suppressed.

Furthermore, in the above embodiment, combining the insertion of cuts with the splitting of the prepreg in the region of creasing occurrence is also possible. For example, in those cases where a plurality of creasing regions are identified, a portion of those regions may be treated by splitting the specified prepreg, while the remaining region(s) are treated by inserting cuts in the prepreg. There are no particular restrictions on the size of the cuts, provided they do not split the prepreg completely.

## Claims

1. A method of molding a composite material structural member in which a desired shape is molded by pressing a prepreg laminate, prepared by laminating prepregs into a flat plate shape, against a molding die, the method comprising:
a preparation step of preparing the prepreg laminate for molding by laminating a plurality of prepregs with different fiber orientations into a flat plate shape, wherein
a specified prepreg having a fiber orientation that coincides with, or is close to, a direction of creasing occurrence is split, either within a region of creasing occurrence or in a vicinity thereof, along a direction substantially orthogonal to the direction of creasing occurrence, and
the split prepreg is then used in preparing the prepreg laminate, and
a pressure application step of pressing the prepreg laminate for molding prepared in the preparation step against the molding die.

2. A method of molding a composite material structural member in which a desired shape is molded by pressing a prepreg laminate, prepared by laminating prepregs into a flat plate shape, against a molding die, the method comprising:
a preparation step of preparing the prepreg laminate for molding by laminating a plurality of prepregs with different fiber orientations into a flat plate shape, wherein
partial cuts are inserted within a specified prepreg having a fiber orientation that coincides with, or is close to, a direction of creasing occurrence, the cuts being inserted either within a region of creasing of the specified prepreg or in a vicinity thereof, and being inserted along a direction substantially orthogonal to the direction of creasing occurrence, and
following insertion of the cuts, the specified prepreg is used in preparing the prepreg laminate, and
a pressure application step of pressing the prepreg laminate for molding prepared in the preparation step against the molding die.

3. A composite material structural member, molded by pressing a flat plate-shaped prepreg laminate against a molding die, wherein
the flat plate-shaped prepreg laminate is prepared by laminating a plurality of prepregs with different fiber orientations into a flat plate shape, and
at least one prepreg that constitutes the prepreg laminate is split, within or near a creasing occurrence region in which creasing is expected to occur, along a direction substantially orthogonal to the direction of creasing occurrence.

4. A composite material structural member, molded by pressing a flat plate-shaped prepreg laminate against a molding die, wherein
the flat plate-shaped prepreg laminate is prepared by laminating a plurality of prepregs with different fiber orientations into a flat plate shape, and
at least one prepreg that constitutes the prepreg laminate has partial cuts inserted, within or near a creasing occurrence region in which creasing is expected to occur, along a direction substantially orthogonal to the direction of creasing occurrence.

## Patentansprüche

1. Ein Verfahren zum Formen eines Verbundstoffmaterial-Strukturelements, bei dem eine gewünschte Form geformt wird durch Pressen eines Prepreg-Laminats, das durch Laminieren bzw. Übereinanderschichten von Prepregs in eine flache Plattenform vorbereitet wird, gegen ein Formwerkzeug, wobei das Verfahren aufweist:
einen Vorbereitungsschritt des Vorbereitens des Prepreg-Laminats zum Formen durch Laminieren bzw. Übereinanderschichten einer Vielzahl von Prepregs mit unterschiedlichen Faserorientierungen in eine flache Plattenform, wobei
ein bestimmtes Prepreg mit einer Faserorientierung, welche mit einer Richtung einer Faltenbildung übereinstimmt oder nahe zu dieser ist, geschlitzt wird, entweder in einem Bereich der Faltenbildung oder in einer Umgebung davon, entlang einer Richtung, welche im Wesentlichen orthogonal zu der Richtung der Faltenbildung ist, und
das geschlitzte Prepreg dann zum Herstellen des Prepreg-Laminats verwendet wird, und
einem Druckaufbringschritt des Pressens des Prepreg-Laminats zum Formen, das in dem Vorbereitungsschritt vorbereitet wurde, gegen das Formwerkzeug.

2. Verfahren zum Formen eines Verbundstoffmaterial-Strukturelements, bei dem eine gewünschte Form geformt wird durch Pressen eines Prepreg-Laminats, das durch Laminieren bzw. Übereinanderschichten von Prepregs in eine flache Plattenform vorbereitet wird, gegen ein Formwerkzeug, wobei das Verfahren aufweist:
einen Vorbereitungsschritt des Vorbereitens des Prepreg-Laminats zum Formen durch Laminieren bzw.
Übereinanderschichten einer Vielzahl von Prepregs mit unterschiedlichen Faserorientierungen in eine flache Plattenform, wobei
Teilschnitte in ein bestimmtes Prepreg eingebracht werden, das eine Faserorientierung besitzt, welche mit einer Richtung einer Faltenbildung übereinstimmt oder nahe zu dieser ist, wobei die Schnitte entweder in einem Bereich der Faltenbildung des bestimmten Prepregs oder in einer Umgebung desselben eingebracht werden, und
entlang einer Richtung eingebracht werden, die im Wesentlichen orthogonal ist zu der Richtung der Faltenbildung, und
nachfolgend dem Einbringen der Schnitte, Verwenden des bestimmten Prepregs zum Herstellen des Prepreg-Laminats, und
einen Druckaufbringschritt des Pressens des Prepreg-Laminats zum Formen, das in dem Vorbereitungsschritt vorbereitet wurde, gegen das Formwerkzeug.

3. Ein Verbundstoffmaterial-Strukturelement, das durch Pressen eines flachen plattenförmigen Prepreg-Laminats gegen ein Formwerkzeug geformt ist, wobei,
das flache plattenförmige Prepreg-Laminat vorbereitet ist durch Laminieren einer Vielzahl von Prepregs mit unterschiedlichen Faserorientierungen in eine flache Plattenform, und
mindestens ein Prepreg, der das Prepreg-Laminat bildet, geschlitzt ist, in oder nahe einem Bereich einer Faltenbildung, in welchem Faltenbildung erwartet wird, entlang einer Richtung im Wesentlichen orthogonal zu der Richtung der Faltenbildung.

4. Ein Verbundstoffmaterial-Strukturelement, das durch Pressen eines flachen plattenförmigen Prepreg-Laminats gegen ein Formwerkzeug geformt ist, wobei,
das flache plattenförmige Prepreg-Laminat vorbereitet ist ist durch Laminieren einer Vielzahl von Prepregs mit unterschiedlichen Faserorientierungen in eine flache Plattenform, und
mindestens ein Prepreg, der das Prepreg-Laminat bildet, eingefügte Teilschnitte aufweist, in oder nahe einem Bereich einer Faltenbildung, in welchem Faltenbildung erwartet wird, entlang einer Richtung im Wesentlichen orthogonal zu der Richtung der Faltenbildung.

## Revendications

1. Procédé pour mouler un élément structurel en matériau composite dans lequel une forme souhaitée est moulée par pressage d'un stratifié de préimprégnés, préparé par stratificationde préimprégnés en une forme de plaque plate, contre une matrice de moulage, lequel procédé comprend:
une étape de préparation consistant à préparer le stratifié préimprégné pour mouler par stratification une pluralité de préimprégné ayant différentes orientations de fibres en une forme de plaque plate, dans laquelle
un préimprégné spécifié, ayant une orientation de fibres qui coïncide avec ou est proche d'une direction d'apparition de pliures, soit au voisinage de celle-ci, le long d'une direction pratiquemment orthogonale à la direction d'apparition de pliures, et
le préimprégné divisé est ensuite utilisé dans la préparation du stratifié de préimpégnés, et
une étape d'application de pression consistant à presser me stratifié de préimprégné pour moulage, préparé dans létape de préparation, contre la matrice de moulage

2. Procédé pour pour mouler un élément structurel en matériau composite dans lequel une forme souhaitée est moulée par pressage d'un stratifié de préimprégnés, préparé par stratification de préimprégné en une forme de plaque plate, contre une matrice de moulage, lequel procédé comprend:
une étape de préparation consistant à préparer le stratifié préimprégné pour mouler par stratification une pluralité de préimprégné ayant différentes orientations de fibres en une forme de plaque plate, dans laquelle
des découpes partielles sont insérées à l'intérieur d'un préimprégné spécifié, ayant une orientation de fibres qui coïncide avec ou est proche d'nu direction d'apparition de pliures, les découpes étant insérées lel ong d'une direction pratiquement orthogonale à la direction d'apparition de pliures, et
après l'insertion des découpes, le préimprégné spécifié est utilisé dans la préparation du stratifié de préimprégnés, et
une étape d'application de pression consistant à presser le stratifié de préimprégnés pour moulage, préparé dans l'étape de préparation, contre lam atrice de moulage.

3. Elément structurel en matériau composite, moulé par pressage d'un stratifié de préimprégnés en forme de plaque plate contre une matrice de moulage, dans lequel
le stratifié de préimprégnés en forme de plaque plate est préparé par stratification d'une pluralité de préimprégné ayant différentes orientations de fibres en une forme de plaque plate, et
au moins un préimprégné qui constitue le stratifié préimprégné est divisé, à l'intérieur ou à proximité d'une region d'apparition de pliures dans laquelle est prévu que des pliures apparaissent, le long d'une direction pratiquement orthogonale à la direction d'apparition de pliures.

4. Elément structurel en matériau composite, moulé par pressage d'un stratifié de préimprégné en forme de plaque plate contre une matrice de moulage, dans lequel
le stratifié de préimprégnés en forme de plaque plate est réparé par stratification d'un pluralité de préimprégnés ayant différentes orientations de fibres en une forme de plaque plate, et
au moins un préimprégné qui constitue le stratifié préimprégné a des découpes partielles insérées, à l'intérieur ou à proximité d'une région d'apparition de pliures dans laquelle il est prévu que des pliures apparaissent, le long d'une direction pratiquement orthogonale à la direction d'apparition de plires.
